Europäisches Patentamt

European Patent Office

Office européen des brevets

(19)

(11) **EP 1 196 346 B1**

(12) **FASCICULE DE BREVET EUROPEEN**

(45) Date de publication et mention
de la délivrance du brevet:
**15.09.2004 Bulletin 2004/38**

(21) Numéro de dépôt: **00949609.2**

(22) Date de dépôt: **03.07.2000**

(51) Int Cl.⁷: $B67C\ 3/20$, $G01G\ 13/285$

(86) Numéro de dépôt international:
**PCT/FR2000/001882**

(87) Numéro de publication internationale:
**WO 2001/005698 (25.01.2001 Gazette 2001/04)**

(54) **PROCEDE DE REMPLISSAGE D'UN RECIPIENT**

VERFAHREN ZUM BEFÜLLEN EINES BEHÄLTERS

METHOD FOR FILLING A CONTAINER

(84) Etats contractants désignés:
**AT BE CH CY DE DK ES FI FR GB GR IE IT LI LU
MC NL PT SE**

(30) Priorité: **19.07.1999 FR 9909327**

(43) Date de publication de la demande:
**17.04.2002 Bulletin 2002/16**

(73) Titulaire: **S.E.R.A.C. GROUP
72400 La Ferte-Bernard (FR)**

(72) Inventeur: **GRAFFIN, André
72400 La Ferte Bernard (FR)**

(74) Mandataire: **Fruchard, Guy et al
CABINET BOETTCHER,
22, rue du Général Foy
75008 Paris (FR)**

(56) Documents cités:
**EP-A- 0 406 092        EP-A- 0 524 850
WO-A-95/11830        DE-U- 9 306 625**

**Description**

La présente invention concerne un procédé de remplissage d'un récipient avec un poids net de produit au moyen d'un organe de remplissage disposé pour introduire le produit dans le récipient alors que celui-ci est porté par un capteur de force.

On connaît différents procédés de remplissage d'un récipient avec un poids net de produit. Traditionnellement, le procédé le plus simple consiste à disposer un récipient sur un organe de pesage, le récipient étant lui-même disposé en-dessous d'un organe de remplissage dont l'ouverture et la fermeture sont commandées par l'organe de pesage en fonction du poids apparent qui est mesuré par celui-ci. Le poids apparent comprend non seulement le poids à vide du récipient et le poids net de produit contenu dans le récipient, mais également la force qui résulte du jet de produit sur la surface du produit contenu dans le récipient. Cette force varie non seulement en fonction de l'ouverture de l'organe de remplissage mais également en fonction de la viscosité du produit, de sorte que si la viscosité du produit varie au cours du remplissage, la mesure de poids effectuée par l'organe de pesage est faussée et le poids net réel de produit introduit dans le récipient à la fin du remplissage n'est pas égal au poids net de produit souhaité.

En outre, au moment de la fermeture de l'organe de remplissage, le produit compris entre l'organe de remplissage et la surface de produit dans le récipient, généralement appelé queue de chute, vient augmenter le poids de produit finalement contenu dans le récipient à la fin du cycle de remplissage. Le poids de la queue de chute varie en fonction du diamètre de l'orifice de l'organe de remplissage juste avant la fermeture et de la viscosité du produit. Dans les procédés traditionnels, la pression du jet pendant le remplissage et le poids de la queue de chute doivent donc faire l'objet de compensations pour obtenir finalement dans le récipient le poids net de produit souhaité.

On connaît également du brevet français 2 679 516 un procédé de remplissage consistant à asservir le débit du produit sur un débit de référence et à effectuer le remplissage pendant un temps fixe prédéterminé calculé au préalable en divisant le poids net par le débit de référence. Ce procédé permet d'éliminer les effets de la pression du jet sur la surface du produit contenu dans le récipient en mesurant le débit instantané sur des intervalles de temps successifs pendant lesquels la force du jet de produit sur la surface du produit contenu dans le récipient est supposée constante. Ce procédé est théoriquement très satisfaisant mais en pratique l'asservissement du débit sur un débit de référence ne permet pas d'obtenir un débit réel exactement égal au débit de référence et il est donc nécessaire de procéder à des compensations en effectuant un contrôle du poids net réel après remplissage et en modifiant les paramètres de la boucle d'asservissement pour les cycles de remplissage ultérieurs afin que le poids net réel soit aussi proche que possible du poids net souhaité.

On connaît encore du document français 2 711 610 un procédé de remplissage comportant les étapes de mesurer sur des intervalles de temps successifs le débit instantané de produit introduit dans le récipient, calculer un poids total de produit introduit dans le récipient à partir du débit instantané sur chaque intervalle de temps, et commander un arrêt de l'écoulement de produit lorsque le poids total calculé atteint le poids net diminué de la queue de chute de produit. Ce procédé présente l'avantage de prendre en compte automatiquement les variations du débit instantané lors du calcul du poids total de produit contenu dans un récipient de sorte que le poids net réel de produit contenu dans le récipient après la fermeture de l'organe de remplissage n'est théoriquement affecté que par les variations de la queue de chute dont l'influence est faible. Toutefois, lors de l'introduction du récipient sur l'organe de pesage et de l'établissement du jet de produit lors de la commande d'écoulement, l'organe de pesage est soumis à des oscillations qui faussent la mesure du débit instantané et par voie de conséquence le calcul du poids total de produit contenu dans le récipient. Pour pallier cet inconvénient il est nécessaire de filtrer le signal de l'organe de pesage, au moins dans la phase initiale du remplissage, par des algorithmes complexes qui augmentent de façon importante le coût de mise en oeuvre de ce procédé de remplissage.

Un but de la présente invention est de proposer un procédé de remplissage d'un récipient qui puisse être mis en oeuvre avec des algorithmes simples tout en permettant d'obtenir une grande précision sur le poids net de produit introduit dans le récipient.

En vue de la réalisation de ce but, on propose selon l'invention, un procédé de remplissage d'un récipient avec un produit au moyen d'un organe de remplissage disposé pour introduire le produit dans le récipient alors que celui-ci est porté par un capteur de force, ce procédé comprenant au moins un cycle comportant les étapes de :

- disposer un récipient sur le capteur de force,
- commander un écoulement de produit par l'organe de remplissage,
- décompter de façon répétée un temps d'écoulement de produit depuis la commande d'écoulement,
- mesurer à au moins un premier et un deuxième instants de relevé séparés une valeur d'un signal fourni par le capteur de force,
- calculer un débit moyen de produit dans un intervalle de temps séparant les instants de relevé,
- effectuer au moins une évaluation calculée d'un temps de remplissage à partir du débit moyen calculé et d'un poids de référence,
- commander un arrêt de l'écoulement de produit lorsque le temps d'écoulement de produit est égal à l'évaluation du temps de remplissage.

Ainsi, l'étape de calcul d'un débit moyen de produit minimise les conséquences des oscillations de départ de sorte qu'un résultat précis est obtenu sans qu'il soit nécessaire d'utiliser des algorithmes de calcul complexes.

Selon une version avantageuse de l'invention, un débit moyen lissé est calculé en choisissant des instants de relevé décalés par rapport à la commande d'écoulement de façon suffisante pour que le capteur de force soit sensiblement stable sur l'intervalle de temps séparant les instants de relevé. La période d'instabilité de départ du cycle est ainsi automatiquement éliminée.

Selon un mode de mise en oeuvre préféré de l'invention, le procédé comporte un cycle d'initialisation comportant les étapes de :

- disposer un récipient d'initialisation sur le capteur de force,
- de préférence, mesurer un poids à vide de référence du récipient au moyen du capteur de force et mémoriser le poids à vide de référence,
- commander un écoulement de produit par l'organe de remplissage,
- décompter de façon répétée un temps d'écoulement de produit depuis la commande d'écoulement,
- calculer au moins une fois le débit moyen lissé de produit,
- effectuer au moins une évaluation calculée d'un temps de remplissage à partir du débit moyen lissé et d'un poids net de produit souhaité,
- commander un arrêt de l'écoulement de produit lorsque le temps d'écoulement de produit est égal à l'évaluation du temps de remplissage,
- mesurer le poids du récipient après remplissage et en déduire une différence entre le poids net de produit souhaité et un poids net réel de produit dans le récipient,
- calculer le poids de référence en déduisant du poids net souhaité la différence entre le poids net souhaité et le poids net réel.

Ainsi, le cycle d'initialisation met en oeuvre des étapes sensiblement identiques à celles des cycles mis en oeuvre ultérieurement pour le remplissage des autres récipients, de sorte que le poids de référence est déterminé sans coût supplémentaire.

D'autres particularités et avantages de l'invention apparaîtront à la lecture de la description qui suit d'un mode de mise en oeuvre préféré du procédé selon l'invention en référence aux figues ci-jointes parmi lesquelles :

- la figure 1 est un diagramme illustrant l'évolution de la force mesurée par le capteur de force en fonction du temps pendant un cycle de remplissage,
- la figure 2 est une représentation schématique par blocs des étapes de remplissage pendant un cycle d'initialisation selon le mode de mise en oeuvre préféré de l'invention,
- la figure 3 est une représentation schématique par blocs des étapes de remplissage pendant un cycle de remplissage normal selon un mode de mise en oeuvre préféré de l'invention.

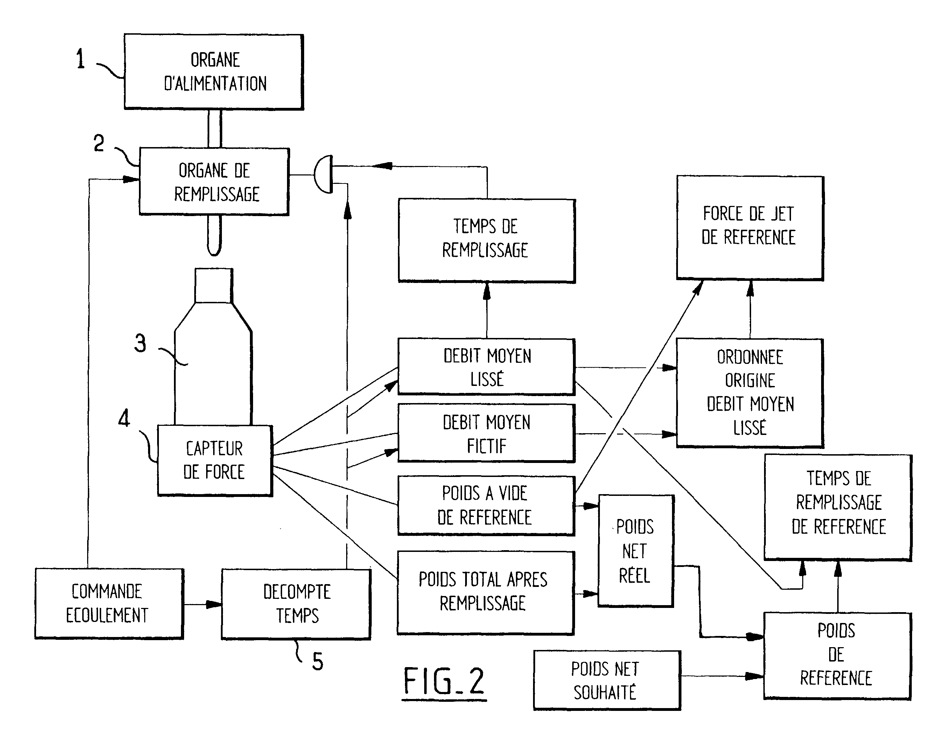

En référence à la figure 2, le procédé selon l'invention est mis en oeuvre par un dispositif comportant d'une façon connue en soi un organe d'alimentation 1 relié à un organe de remplissage 2 disposé au-dessus d'un récipient 3 lui-même porté par un capteur de force 4. L'organe d'alimentation est par exemple une cuve portée par la plate-forme rotative d'un carrousel ou une cuve séparée du carrousel et reliée à la plate-forme par une canalisation comportant un joint tournant. L'écoulement à partir de l'organe d'alimentation peut être favorisé par une pompe centrifuge. L'organe de remplissage 2 est par exemple une vanne ou une vis d'Archimède commandée par un moteur pas à pas, la vitesse du moteur déterminant le débit entraîné par la vis d'Archimède, en particulier dans le cas d'un produit pâteux tel que de la mayonnaise ou d'un produit hétérogène tel qu'une sauce avec des morceaux. On remarquera à ce propos que la commande de l'organe de remplissage ne peut pas être effectuée directement sur une valeur de débit mais sur un paramètre physique (section d'ouverture ou vitesse de rotation de la vis), le débit réel dépendant non seulement du paramètre physique commandé mais d'autres paramètres tels que la densité du produit, sa viscosité et la pression dans le conduit d'alimentation.

Le dispositif comporte également un organe de décompte de temps 5 comprenant une horloge destinée à donner une base de temps commune aux différents organes assurant la mise en oeuvre du procédé selon l'invention.

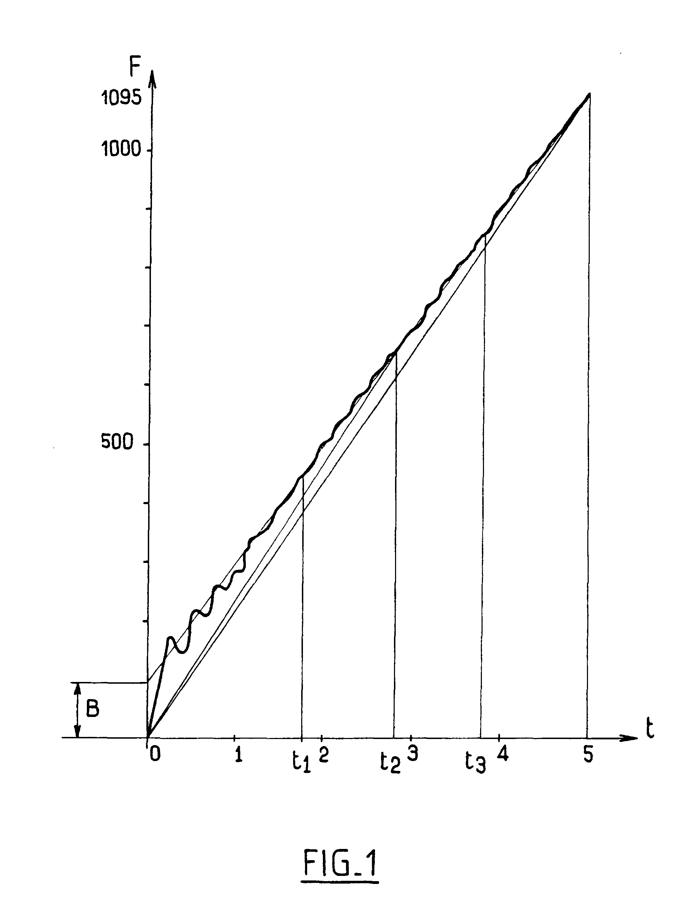

Le diagramme de la figure 1 illustre l'évolution de la force mesurée par le capteur de force en fonction du temps pendant le remplissage d'une bouteille de un litre avec du lait. Le temps d'un cycle de remplissage est de l'ordre de 5 secondes, ce qui implique un débit moyen de l'ordre de 200 grammes par seconde. On imagine aisément qu'un débit aussi élevé implique une force de jet importante. L'établissement du jet de produit provoque donc un choc sur le fond du récipient, ce qui explique les oscillations de la force mesurée par le capteur.de force pendant un peu plus d'une seconde à partir du démarrage d'un cycle. On remarquera que ces oscillations pourraient être évitées si l'on attendait une stabilisation du capteur de force après l'introduction du récipient et si l'on effectuait une commande d'écoulement en augmentant le débit de façon très progressive pour éviter un choc sur le capteur de force. Une telle solution entraînerait toutefois un allongement de la durée d'un cycle de remplissage de façon totalement incompatible avec les cadences de remplissage exigées à l'heure actuelle.

Selon le mode de mise en oeuvre préféré de l'invention, on prévoit un procédé de remplissage comprenant tout d'abord un cycle d'initialisation permettant d'acquérir un certain nombre de paramètres propres à l'installation. Pendant le cycle d'initialisation, un récipient 3 est disposé sur le capteur de force 4 et une mesure du poids à vide du récipient est effectuée après avoir laissé le capteur de force se stabiliser. La mesure du poids à vide du récipient utilisé pour le cycle d'initialisation est mémorisée et sera par la suite désignée par poids à vide de référence. Une commande de l'écoulement est ensuite déclenchée ainsi qu'un décompte de temps permettant de mesurer de façon répétée un temps d'écoulement de produit depuis la commande d'écoulement, le décompte de temps est par exemple effectué à chaque millième de seconde. Parallèlement, une mesure du signal de force fournie par le capteur de force est effectués à des instants de relevé séparés, par exemple tous les 1/250ème de seconde. Les valeurs du signal de force ainsi relevées sont utilisées pour calculer un débit moyen de produit dans l'intervalle de temps séparant les instants de relevé.

Selon le mode de mise en oeuvre préféré de l'invention, le débit moyen est calculé de deux façons différentes : d'une part un débit moyen lissé calculé en choisissant des instants de relevé décalés par rapport à la commande d'écoulement de façon suffisante pour que le capteur de force soit sensiblement stable sur l'intervalle de temps séparant les instants de relevé.

En référence à la figure 1, le débit moyen lissé ne sera donc pas calculé pendant la période d'un peu plus d'une seconde qui suit la commande d'écoulement mais sera calculé de façon répétée par la suite, par exemple entre des instants T1, T2 et T3 qui ont été illustrés de façon volontairement très séparée sur la figure 1 pour une meilleure compréhension. Le débit moyen lissé est calculé en divisant un écart de force entre deux instants de relevé par le temps décompté entre ces deux instants. Si l'on désigne par F1 la valeur de la force mesurée à l'instant t1, F2 la force mesurée à l'instant t2..., on peut donc calculer un premier débit moyen lissé entre des instants t1 et t2 selon la formule

$$D1 = (F2 - F1)/(t2 - t1).$$

A l'instant t3 ultérieur, le débit moyen lissé peut être calculé soit en prenant l'écart de force entre F2 et F3, soit l'écart de force entre F1 et F3 et en divisant cet écart par le temps décompté correspondant. Afin d'obtenir un meilleur lissage, on peut également calculer le débit moyen lissé en effectuant une moyenne de la force relevée à différents instants précédant l'instant de relevé et en effectuant le calcul de l'écart de force entre la valeur relevée au dernier instant et la moyenne calculée sur les instants précédents, puis en divisant par l'intervalle de temps pris entre le dernier instant de relevé et la moyenne des instants de relevé pris en compte pour le calcul de la moyenne des écarts de force. On peut également effectuer un lissage en effectuant une moyenne de plusieurs débits moyens lissés. Quoi qu'il en soit, chaque débit moyen lissé calculé est caractéristique d'une droite d'équation

$$F = D1.t+B$$

où F est représentatif d'une force appliquée sur le capteur de force, c'est-à-dire non seulement le poids du récipient et le poids net de produit contenu dans le récipient, mais également la force du jet de produit, D1 est le débit moyen lissé, t est le temps décompté depuis la commande d'écoulement, et B est l'ordonnée à l'origine de la droite représentative du débit moyen lissé, c'est-à-dire que B est représentatif de la somme du poids à vide T du récipient et de la force Fj du jet de produit. On remarquera que la force Fj n'est pas directement mesurable car elle supposerait une réaction instantanée du capteur de force au moment de l'établissement du jet.

Par ailleurs, un débit moyen fictif Df est calculé en divisant la valeur du signal de force à un instant donné par le temps décompté depuis la commande d'écoulement. Le débit moyen fictif est représentatif d'une droite joignant l'origine au point correspondant de la courbe de remplissage. A chaque calcul du débit moyen fictif correspond une droite différente. Afin de ne pas surcharger la figure, seules les droites représentatives des débits moyens fictifs à l'instant T2 et à la fin du remplissage ont été représentées sur la figure 1. La droite représentative du débit moyen fictif a pour équation

$$F = Df.t.$$

Lorsque le débit moyen lissé et le débit moyen fictif sont calculés à un même instant de relevé la force mesurée par le capteur de force est la même, il est donc possible de calculer l'ordonnée à l'origine de la droite représentative du débit lissé par l'intersection des droites, soit

$$Df.t = D1.t + B$$

d'où l'on tire

$$B = (Df - D1)/t.$$

Pendant le cycle d'initialisation, le poids à vide de référence Tr du récipient est connu. Il est donc possible de calculer une force de jet de référence Fjr par application de la formule

$$Fjr = Br - Tr$$

où Br est l'ordonnée à l'origine de la droite représentative du débit moyen lissé pendant le cycle d'initialisation.

Simultanément au calcul de la force de jet de référence, on effectue une évaluation calculée du temps de remplissage à partir du débit moyen lissé en divisant le poids net de produit que l'on souhaite introduire dans le récipient par le débit moyen lissé calculé. Le temps décompté depuis la commande d'écoulement est périodiquement comparé au temps de remplissage ainsi calculé et un arrêt de l'écoulement est commandé lorsque le temps d'écoulement de produit est égal à l'évaluation du temps de remplissage.

On remarquera qu'en raison de l'assimilation qui a été faite de la courbe de remplissage à une droite et en raison du fait que le poids de la queue de chute n'a pas été pris en compte pour commander l'arrêt de l'écoulement, le poids net réel de produit contenu dans le récipient à la fin du cycle d'initialisation ne peut pas être égal au poids net souhaité.

Selon une caractéristique de l'invention on effectue dans le cycle d'initialisation une mesure du poids total après remplissage et un calcul du poids net réel par soustraction du poids à vide de référence Tr préalablement mémorisé, le capteur de force est alors utilisé à la façon d'une balance. Un poids de référence Pr est ensuite calculé en soustrayant du poids net souhaité la différence entre le poids net réel et le poids net souhaité. A partir du poids de référence Pr on peut également calculer un temps de remplissage de référence tr en divisant le poids de référence par le débit moyen lissé au cours du cycle d'initialisation.

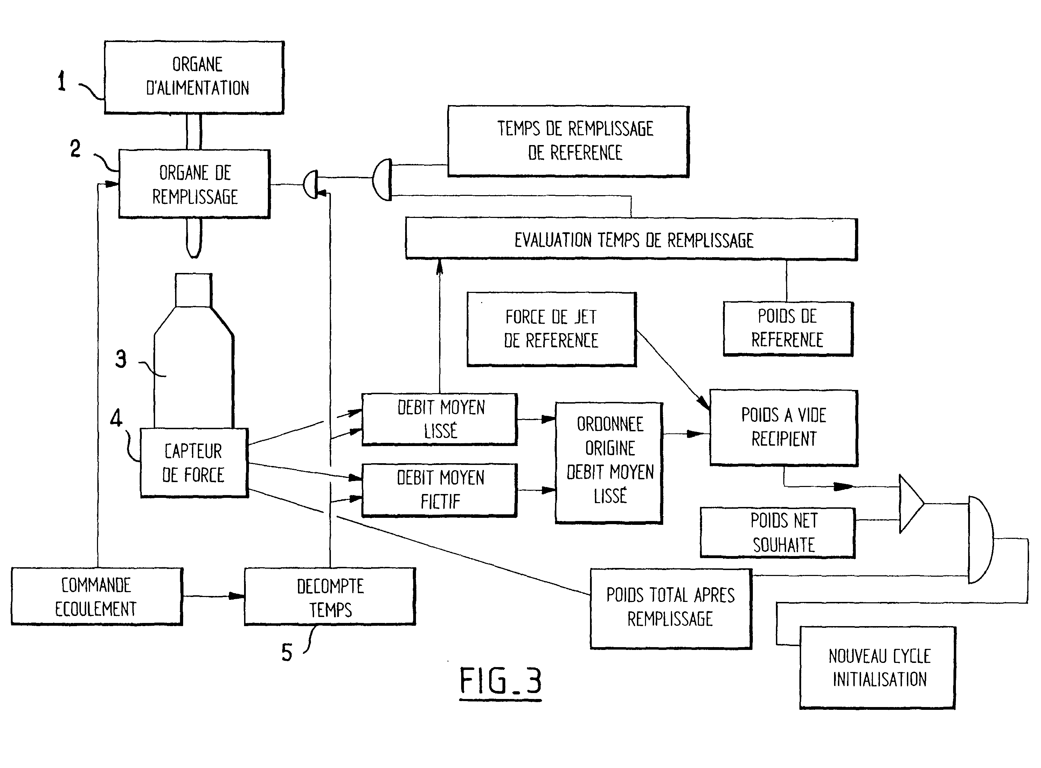

En référence à la figure 3, les paramètres du cycle d'initialisation sont utilisés selon l'invention pour les cycles de remplissage ultérieurs des récipients. Pour chaque cycle de remplissage un récipient est disposé sur le capteur de force mais contrairement au cycle d'initialisation une commande d'écoulement de produit par l'organe de remplissage est immédiatement effectuée sans qu'il soit nécessaire d'attendre une stabilisation du capteur de force après l'introduction du récipient. La commande d'écoulement peut même être anticipée par rapport à l'introduction du récipient sur le capteur de force afin qu'en dépit du temps de réponse de l'organe de remplissage, le jet de produit atteigne le récipient au moment même où celui-ci est mis en place sur le capteur de force, ce qui permet d'augmenter la cadence de remplissage. De la même façon que pendant le cycle d'initialisation un calcul du débit moyen lissé et du débit moyen fictif est effectuée de façon répétée à différents instants de relevé, ce qui permet à chaque fois de déterminer l'ordonnée à l'origine de la droite représentative du débit moyen lissé comme dans le cycle d'initialisation.

La valeur calculée de cette ordonnée à l'origine est cette fois utilisée pour effectuer une estimation du poids à vide T du récipient en cours de remplissage en utilisant la force de jet de référence préalablement mémorisée par application de la formule

$$T = B - Fjr.$$

La valeur du poids à vide du récipient ainsi obtenue peut être utilisée pour contrôler le poids net ainsi qu'il sera indiqué ci-dessous.

Une évaluation calculée de temps de remplissage est ensuite effectuée en divisant le dernier poids de référence calculé par le dernier débit moyen lissé calculé.

Une commande d'arrêt de l'écoulement de produit est effectuée lorsque le temps d'écoulement de produit décompté par l'organe de décompte de temps est égal à l'estimation du temps de remplissage.

Selon le mode de mise en oeuvre préféré illustré par la figure 3, une comparaison est effectuée après chaque évaluation de temps de remplissage entre le temps de remplissage calculé et le temps de remplissage de référence calculé à la fin du cycle d'initialisation et si l'écart dépasse une valeur critique, par exemple 5 % du temps de remplissage de référence, l'arrêt de l'écoulement est commandé en utilisant le temps de remplissage de référence et un cycle d'initialisation est à nouveau lancé afin de permettre une remise à jour des paramètres de l'installation.

Si le temps du cycle de remplissage est suffisamment court par rapport à la cadence souhaitée, un contrôle est de préférence effectué à la fin de chaque cycle de remplissage. Ce contrôle consiste à mesurer le poids du récipient rempli, à comparer le poids mesuré à un poids estimé égal à la somme du poids à vide estimé et du poids net de produit souhaité. Lorsque ce contrôle révèle entre le poids mesuré et le poids estimé un écart dépassant une valeur critique, un nouveau cycle d'initialisation est déclenché. Ce contrôle peut également être utilisé sans remplacer l'évaluation calculée du temps de remplissage par le temps de remplissage de référence lorsque l'évaluation du temps de remplissage s'écarte de façon anormale du temps de remplissage de référence.

Bien entendu, l'invention n'est pas limitée au mode de mise en oeuvre décrit et est susceptible de variantes sans sortir du cadre de l'invention tel que défini par les revendications.

En particulier, bien que l'acquisition des paramètres de l'installation ait été décrite en mettant en oeuvre un cycle d'initialisation, on peut prévoir d'obtenir ces paramètres soit par des calculs, soit par des mesures effectuées indépendamment de la mise en oeuvre du procédé de remplissage selon l'invention. Par exemple, lorsque les récipients ont un poids à vide constant d'un récipient à un autre, on peut supprimer l'étape de mesure du poids à vide du récipient dans le cycle d'initialisation ainsi que l'étape d'estimation du poids à vide du récipient dans les cycles de remplissage ultérieurs.

Lorsque les paramètres de l'installation sont très constants ou lorsque les contraintes de précision du remplissage sont réduites, on peut également prévoir de simplifier le procédé selon l'invention en effectuant une évaluation calculée du temps de remplissage à partir d'un seul calcul du débit moyen, par exemple environ quatre secondes après la commande d'écoulement.

Par ailleurs, on remarquera sur la figure 1 qu'en raison de la forte pente de la courbe de remplissage dans sa partie sensiblement rectiligne et du faible décalage de l'ordonnée à l'origine, la droite représentative du débit moyen fictif est très proche de la courbe de remplissage réel en particulier en fin de remplissage. Sans sortir du cadre de l'invention, on peut donc prévoir d'effectuer l'estimation de temps de remplissage en remplaçant le débit moyen lissé par le débit moyen fictif et d'effectuer une correction soit par des mesures effectuées lors d'un cycle d'initialisation, soit par des corrections calculées.

Dans le cas d'une comparaison entre le temps de remplissage évalué et un temps de remplissage de référence, on peut prévoir une mise à jour du temps de remplissage de référence en remplaçant le temps de remplissage de référence initial par le dernier temps de référence de remplissage évalué lorsque l'écart ne dépasse pas la valeur critique. On peut également prévoir un deuxième seuil critique pour lequel une alarme est immédiatement déclenchée lorsque l'écart entre le temps de remplissage évalué et le temps de remplissage de référence dépasse ce second seuil.

## Revendications

1. Procédé de remplissage d'un récipient avec un poids net de produit au moyen d'un organe de remplissage disposé pour introduire le produit dans le récipient alors que celui-ci est porté par un capteur de force, **caractérisé en ce qu'**il comprend au moins un cycle comportant les étapes de :

   - disposer un récipient sur le capteur de force,
   - commander un écoulement de produit par l'organe de remplissage,
   - décompter de façon répétée un temps d'écoulement de produit depuis la commande d'écoulement,
   - mesurer à au moins un premier et un deuxième instants de relevé séparés une valeur d'un signal fourni par le capteur de force,
   - calculer un débit moyen de produit dans un intervalle de temps séparant les instants de relevé,
   - effectuer au moins une évaluation calculée d'un temps de remplissage à partir du débit moyen calculé et d'un poids de référence,
   - commander un arrêt de l'écoulement de produit lorsque le temps d'écoulement de produit est égal à l'évaluation du temps de remplissage.

2. Procédé selon la revendication 1, **caractérisé en ce qu'**un débit moyen lissé est calculé en choisissant des instants de relevé décalés par rapport à la commande d'écoulement de façon suffisante pour que le capteur de force soit sensiblement stable sur l'intervalle de temps séparant les instants de relevé.

3. Procédé selon la revendication 2, **caractérisé en ce qu'**il comporte un cycle d'initialisation comprenant les étapes de :

   - disposer un récipient sur le capteur de force,
   - commander un écoulement de produit par l'organe de remplissage,
   - décompter de façon répétée un temps d'écoulement de produit depuis la commande d'écoulement,
   - calculer au moins une fois le débit moyen lissé de produit,
   - effectuer au moins une évaluation calculée d'un temps de remplissage à partir du débit moyen lissé et d'un poids net de produit souhaité,
   - commander un arrêt de l'écoulement de produit lorsque le temps d'écoulement de produit est égal à l'évaluation du temps de remplissage,
   - mesurer le poids du récipient après remplissage et en déduire une différence entre le poids net de produit souhaité et un poids net réel de produit dans le récipient,
   - calculer le poids de référence en déduisant du poids net souhaité la différence entre le poids net souhaité et le poids net réel.

4. Procédé selon la revendication 3, **caractérisé en ce qu'**il comporte l'étape préalable de mesurer un poids à vide de référence du récipient au moyen du capteur de force et mémoriser le poids à vide de référence.

5. Procédé selon la revendication 3, **caractérisé en ce que** lors du cycle d'initialisation, il comporte les étapes de

   - calculer au moins une fois un débit moyen fictif entre la commande d'écoulement et un dernier instant de relevé,
   - calculer une différence entre le débit moyen fictif et le débit moyen lissé par référence à un poids à vide de référence du récipient,
   - en déduire une force de jet de référence du produit et mémoriser celle-ci,

   et **en ce que**, lors de chaque cycle ultérieur, il comporte les étapes de :

   - calculer au moins une fois le débit moyen fictif,
   - calculer la différence entre le débit moyen fictif et le débit moyen lissé, par référence à la force de jet de référence et estimer un poids à vide du récipient en cours de remplissage.

6. Procédé selon la revendication 5, **caractérisé en ce qu'**il comporte les étapes de mesurer le poids du récipient rempli, comparer le poids mesuré à un poids estimé égal à la somme du poids à vide estimé et du poids net de produit souhaité et déclencher un nouveau cycle d'initialisation lorsqu'un écart entre le poids mesuré et le poids estimé dépasse une valeur critique.

7. Procédé selon la revendication 6, **caractérisé en ce que** lors du cycle d'initialisation, il comporte après correction du poids de référence, les étapes d'évaluer un temps de remplissage de référence, et mémoriser celui-ci, et **en ce que** lors de chaque cycle ultérieur, il comporte les étapes de comparer l'évaluation de temps de remplissage du récipient en cours de remplissage avec le temps de remplissage de référence et effectuer une comparaison entre le poids mesuré et le poids estimé lorsqu'un écart entre l'estimation de temps de remplissage et le temps de remplissage de référence dépasse une valeur critique.

**Patentansprüche**

1. Verfahren zum Befüllen eines Behälters mit einem Nettogewicht eines Produktes mittels einer Abfüllvorrichtung, die derart angeordnet ist, dass sie das Produkt in den Behälter einfüllt, während dieser von einem Kraftaufnehmer gehalten wird, **dadurch gekennzeichnet, dass** das Verfahren mindestens einen Zyklus umfasst, der aus den Schritten besteht:

   - Anordnen eines Behälters auf dem Kraftaufnehmer,

   - Steuern eines Fließens des Produktes aus der Abfüllvorrichtung,

   - wiederholtes Messen einer Produktfließzeit ab der Steuerung des Fließens,

   - Messen eines Wertes eines von dem Kraftaufnehmer gelieferten Signals zu mindestens einem ersten und einem zweiten Ablesezeitpunkt, wobei der erste und der zweite Ablesezeitpunkt getrennt sind,

   - Berechnen eines mittleren Produktdurchsatzes innerhalb eines Zeitintervalls, das die Ablesezeitpunkte voneinander trennt,

   - Durchführen mindestens einer rechnerischen Ermittlung einer Abfüllzeit ausgehend von dem berechneten mittleren Durchsatz und einem Referenz-Gewicht,

   - Befehlen eines Anhaltens des Produktflusses, wenn die Produktfließzeit gleich der berechneten Abfüllzeit ist.

2. Verfahren nach Anspruch 1, **dadurch gekennzeichnet, dass** ein geglätteter mittlerer Durchsatz berechnet wird, indem die Ablesezeitpunkte so ausreichend zeitlich versetzt gegenüber dem Fließbefehl gewählt werden, dass der Kraftaufnehmer in dem Zeitintervall, das die Ablesezeitpunkte voneinander trennt, im wesentlichen stabil ist.

3. Verfahren nach Anspruch 2, **dadurch gekennzeichnet, dass** es einen Initialisierungszyklus umfasst, der aus den Schritten besteht:

   - Anordnen eines Behälters auf dem Kraftaufnehmer,

   - Steuern eines Fließens des Produktes aus der Abfüllvorrichtung,

   - wiederholtes Messen einer Fließzeit des Produktes ab dem Fließbefehl,

   - mindestens einmaliges Berechnen des geglätteten mittleren Produktdurchsatzes,

   - Durchführen mindestens einer rechnerischen Ermittlung einer Abfüllzeit ausgehend von dem geglätteten mittleren Durchsatz und einem Soll-Nettogewicht des Produktes,

   - Befehlen eines Anhaltens des Produktflusses, wenn die Produktfließzeit gleich der berechneten Abfüllzeit ist,

   - Messen des Gewichts des Behälters nach Befüllung und davon Abziehen einer Differenz zwischen dem Soll-Nettogewicht des Produktes und einem Ist-Nettogewicht des Produktes in dem Behälter,

   - Berechnen des Referenz-Gewichts, indem man von dem Soll-Nettogewicht die Differenz zwischen dem Soll-Nettogewicht und dem Ist-Nettogewicht abzieht.

4. Verfahren nach Anspruch 3, **dadurch gekennzeichnet, dass** es den vorausgehenden Schritt des Messens eines Referenz-Leergewichts des Behälters mittels des Kraftaufnehmers und des Speicherns des Referenz-Leergewichts umfasst.

5. Verfahren nach Anspruch 3, **dadurch gekenn-**

**zeichnet, dass** es während des Initialisierungszyklus die Schritte umfasst:

-   mindestens einmaliges Berechnen eines fiktiven mittleren Durchsatzes zwischen dem Fließbefehl und einem letzten Ablesezeitpunkt,

-   Berechnen einer Differenz zwischen dem fiktiven mittleren Durchsatz und dem geglätteten mittleren Durchsatz unter Bezugnahme auf ein Referenz-Leergewicht des Behälters,

-   davon Abziehen einer Referenz-Strahlkraft des Produktes und Speichern derselben,

und dass es während jedes letzten Zyklus die Schritte umfasst:

-   mindestens einmaliges Berechnen des fiktiven mittleren Durchsatzes,

-   Berechnen der Differenz zwischen dem fiktiven mittleren Durchsatz und dem geglätteten mittleren Durchsatz unter Bezugnahme auf die Referenz-Strahlkraft und Abschätzen eines Leergewichts des Behälters während der Befüllung.

6.  Verfahren nach Anspruch 5, **dadurch gekennzeichnet, dass** es die Schritte umfasst: Messen des Gewichts des befüllten Behälters, Vergleichen des gemessenen Gewichts mit einem abgeschätzten Gewicht, das gleich der Summe des abgeschätzten Leergewichts und des Soll-Nettogewichts des Produktes ist, und Einleiten eines neuen Initialisierungszyklus, wenn eine Differenz zwischen dem gemessenen Gewicht und dem abgeschätzten Gewicht einen kritischen Wert überschreitet.

7.  Verfahren nach Anspruch 6, **dadurch gekennzeichnet, dass** es während des Initialisierungszyklus nach der Korrektur des Referenz-Gewichts die Schritte des Berechnens einer Referenz-Abfüllzeit und des Speicherns derselben umfasst, und dass es während jedes letzten Zyklus die Schritte des Vergleichens der berechneten Abfüllzeit des Behälters während der Abfüllung mit der Referenz-Abfüllzeit und des Durchführens eines Vergleichs zwischen dem gemessenen Gewicht und dem abgeschätzten Gewicht umfasst, wenn eine Differenz zwischen der berechneten Abfüllzeit und der Referenz-Abfüllzeit einen kritischen Wert überschreitet.

## Claims

1.  A method of filling a receptacle with a net weight substance by means of a filler member disposed to introduce the substance into the receptacle while the receptacle is being carried by a force sensor, the method being **characterized in that** it comprises at least one cycle comprising the steps of:

-   placing the receptacle on the force sensor;
-   commanding the filler member to start a flow of the substance;
-   repeatedly measuring the time for which the substance has been flowing since the start-of-flow command was issued;
-   measuring a value of a signal supplied by the force sensor at least at first and second separate measurement instants;
-   calculating a mean flow rate of the substance over the time interval between the measurement instants;
-   making at least one computed evaluation of a filling time on the basis of the calculated mean flow rate and a reference weight; and
-   commanding the flow of substance to stop when the flow time of the substance is equal to the evaluated filling time.

2.  A method according to claim 1, **characterized in that** a smoothed mean flow rate is calculated by selecting measurement instants that are offset from the start-of-flow command sufficiently for the force sensor to be substantially stable over the time interval between the measurement instants.

3.  A method according to claim 2, **characterized in that** it includes an initialization cycle comprising the steps of:

-   placing a receptacle on the force sensor;
-   commanding the filler member to start the flow of substance;
-   repeatedly measuring a substance flow time from the start-of-flow command;
-   calculating at least once the smoothed mean flow rate of the substance;
-   calculating at least one evaluation of a filling time on the basis of the smoothed mean flow rate and a desired net weight of substance;
-   commanding the flow of substance to stop when the product flow time is equal to the evaluated filling time;
-   measuring the weight of the receptacle after filling and deducing therefrom a difference between the desired net weight of substance and the real net weight of substance in the receptacle; and
-   calculating the reference weight by subtracting the difference between the desired net weight and the real net weight from the desired net weight.

4. A method according to claim 3, **characterized in that** it includes a prior step of measuring a reference tare weight of the receptacle by means of the force sensor, and storing the reference tare weight.

5. A method according to claim 3, **characterized in that** during the initialization cycle, it includes the steps of:

   - calculating at least once a simplified mean flow rate between the start-of-flow command and a latest measurement instant;
   - calculating the difference between the simplified mean flow rate and the smoothed mean flow rate by reference to a reference tare weight of the receptacle; and
   - deducing therefrom a reference jet force of the product and storing it;

   and **in that**, during each subsequent cycle, it includes the steps of:

   - calculating at least once the simplified mean flow rate; and
   - calculating the difference between the simplified mean flow rate and the smoothed mean flow rate with reference to the reference jet force and estimating an tare weight for the receptacle that is being filled.

6. A method according to claim 5, **characterized in that** it includes the steps of measuring the weight of the receptacle, comparing the measured weight with an estimated weight equal to the sum of the estimated tare weight plus the desired net weight of substance, and triggering a new initialization cycle whenever the difference between the measured weight and the estimated weight exceeds a critical value.

7. A method according to claim 6, **characterized in that** during the initialization cycle it includes, after correcting the reference weight, the steps of evaluating a reference filling time and of storing it, and **in that** during each subsequent cycle, it includes the steps of comparing the evaluated filling time for the receptacle being filled with the reference filling time and of comparing the measured weight and the estimated weight when a difference between the estimated filling time and the reference filling time exceeds a critical value.

FIG.1

FIG_2

FIG.3